# DEMANDE DE BREVET EUROPEEN

(11) **EP 0 902 135 A1**
(43) Date de publication de la demande: **17.03.1999**
(21) Numéro de dépôt: 98420157.4
(22) Date de dépôt: 11.09.1998
(51) Int. Cl.: E04F 13/16, B32B 5/26

(54) **Revêtement extérieur de façade de bâtiment**

(30) Priorité: 15.09.1997 FR 9711661
(71) Demandeur: Mermet S.A., 38630 Veyrins (FR)
(72) Inventeur: Klethi, Thierry, 38510 Brangues (FR); Mouraret, Didier, 38630 Les Avenières (FR); Bru, Bernard, 38300 Bourgoin-Jallieu (FR)
(74) Mandataire: Maureau, Philippe

(57) **Abrégé**

Ce revêtement comporte, depuis sa face destinée à être fixée sur la façade vers sa face tournée vers l'extérieur :
- une nappe textile (2) réalisée à partir de fibres résistant aux milieux acide et basique, à l'humidité, possédant des propriétés d'allongement, et formant une structure poreuse,
- une nappe textile intermédiaire (3) réalisée à partir de fibres de renfort, et fournissant au revêtement sa résistance mécanique,
- une couche de décor (4),

les différentes nappes et couche étant assemblées les unes aux autres pour former un complexe.

Ce revêtement est fixé par une peinture colle sur la façade puis peint.

## Description

La présente invention a pour objet un revêtement extérieur de façade de bâtiment et notamment un revêtement pour façade réalisée à partir de béton coulé sur place, d'éléments agglomérés à base de béton ou de briques.

Il existe un grand nombre de types de revêtements extérieurs de façade de bâtiment. Un premier revêtement est constitué par une peinture qui assure une fonction de finition, mais qui doit être appliquée sur un support parfaitement continu. Le coût d'application d'une peinture n'est pas élevé, mais ses propriétés sont restreintes, ne permettant pas notamment de rattraper des défauts, de masquer des fissures existantes, de résister à une fissuration à venir, ni de fournir une bonne imperméabilisation. En outre, la durée de vie d'une peinture est relativement réduite, nécessitant un entretien périodique.

Un autre type de revêtement est constitué par les revêtements plastiques épais c'est-à-dire appliqués sous une épaisseur de l'ordre de 1 mm, pouvant ainsi masquer de petits défauts de finition du béton et permettre une structuration aléatoire du relief superficiel. Ce type de revêtement ne permet pas de résister à la fissuration, ne masque pas les joints, et n'est pas considéré comme imperméable.

Les revêtements imperméables sont constitués d'une couche d'épaisseur régulière armée d'un non-tissé polyester, et visent à assurer, outre la fonction de finition, un rattrapage des défauts, le masquage de fissures existantes, une bonne résistance à des fissurations à venir, une bonne imperméabilité, mais permettent peu la création de variétés décoratives, comme les revêtements plastiques épais.

Ces enduits imperméables sont chers, et leur durée de vie est relativement limitée puisqu'ils nécessitent une réfection à l'expiration d'une période de l'ordre d'une dizaine d'années.

Les enduits traditionnels sont réalisés avec un liant principal hydraulique et sont normalement constitués de trois couches : le gobetis qui a pour objet de rattraper les irrégularités du mur, le corps de l'enduit qui assure les fonctions essentielles et le revêtement de finition. Les couches sont de plus en plus plastiques en allant vers la surface de l'ensemble, permettant de pallier au moins pour partie les effets de la micro-fissuration. Si la durée de vie de ces enduits est très longue, et peut être estimée à plusieurs dizaines d'années, leur mise en oeuvre nécessitant le passage de plusieurs couches est également longue et par conséquent coûteuse.

Les enduits traditionnels sont de plus en plus remplacés par des enduits monocouches qui nécessitent une simple préparation par mélange à l'eau sur le chantier avant application sur la façade. Ces produits nécessitent généralement une projection à l'aide de machines.

Du fait de leur formulation, ces enduits permettent une bonne finition, un rattrapage de certains défauts de planéité locale, assurent une imperméabilisation satisfaisante ainsi que la possibilité de création de variétés architecturales, mais masquent mal les fissures existantes, ne résistent pas à la fissuration à venir, et ne permettent pas, à fortiori, de reconstituer une continuité au droit des joints de la façade.

Une autre technique consiste à fixer un isolant en plaques sur le mur, puis à revêtir celui-ci d'un enduit armé, qui est le plus souvent à base organique avec une finition de type revêtement plastique épais. Cette technique offre de nombreux avantages, mais est d'un coût de mise en oeuvre très élevé.

D'autres solutions enfin consistent dans des revêtements collés ou scellés de type céramique ou pâte de verre, ou encore dans la mise en place de bardages rapportés.

Le but de l'invention est de fournir un revêtement extérieur de façade de bâtiment assurant une finition esthétique de la façade, permettant de rattraper les défauts de planéité locale, de masquer les fissures existantes, de résister à la fissuration, de procurer une bonne imperméabilité, d'assurer une continuité au niveau des joints, de permettre une variété de décors, pouvant être appliqué sur différents supports, possédant une bonne résistance au temps, c'est-à-dire ne nécessitant pas d'entretien pendant au moins dix ans, susceptible d'une réfection par peinture, d'un prix de revient modéré, et d'une mise en oeuvre simple pour les opérateurs.

A cet effet, le revêtement de façade qu'elle concerne comporte, depuis sa face destinée à être fixée sur la façade vers sa face tournée vers l'extérieur :
- une nappe textile réalisée à partir de fibres résistant aux milieux acide et basique, à l'humidité, possédant des propriétés d'allongement, et formant une structure poreuse,
- une nappe textile intermédiaire réalisée à partir de fibres de renfort, et fournissant au revêtement sa résistance mécanique,
- une couche de décor,

les différentes nappes et couche étant assemblées les unes aux autres pour former un complexe.

La nappe textile tournée du côté intérieur est constituée par exemple par un non-tissé en polyester de masse surfacique comprise entre 5 et 400 g/m² et de préférence entre 30 et 60 g/m².

Il s'agit d'une couche qui réalise l'interface du revêtement avec le mur, qui permet d'obtenir une surface régulière et uniforme assurant un bon accrochage sur le mur, et poreuse pour laisser passer une peinture colle préalablement appliquée sur le mur pour que celle-ci imbibe la nappe textile intermédiaire.

La nappe textile intermédiaire est constituée par exemple par un tissu de fils de verre, d'une masse surfacique comprise entre 50 et 500g/m² et de préférence entre 80 et 150g/m². Cette nappe intermédiaire est une nappe de renfort, qui apporte la résistance mécanique notamment contre les fissures qui peuvent ultérieurement se produire.

La couche de décor peut être constituée par des fils de verre formant des reliefs localisés, la masse surfacique étant par exemple inférieure à 25 g/m² et dépendant du relief souhaité. Les trois premières couches peuvent être assemblées par couture, par exemple à l'aide d'un fil polyester.

Suivant une autre possibilité, la couche de décor comporte des blocs, par exemple en mousse, fixés par collage.

Avantageusement, le revêtement comprend une couche extérieure de protection constituée par une nappe textile, par exemple une nappe de non-tissé en polyester, d'une masse surfacique comprise entre 5 et 100 g/m² et de préférence entre 10 et 30 g/m². Cette couche extérieure de protection est thermofixée sur la couche de décor, par exemple thermocollée. L'intérêt de cette couche extérieure est de fournir une stabilité dimensionnelle plus importante au revêtement, de protéger le complexe contre des dégradations, telles que le délaminage, de fournir un aspect plus lisse, de moins retenir les poussières, et de protéger les opérateurs assurant la pose contre les désagréments dûs aux fibres de verre.

Dans la mesure où la couche extérieure est thermofixée, il n'existe pas de fil de couture apparent, et la surface extérieure du produit est parfaitement lisse.

En pratique, la mise en place de ce revêtement complexe est effectuée en apposant sur le mur un fixateur, une couche de peinture colle adaptée, de masse surfacique de 600g/m², en appliquant ensuite le revêtement contre le mur, après quoi une deuxième couche de peinture colle, pouvant être similaire à la première, est appliquée sur la face extérieure du revêtement, une couche de peinture de finition étant appliquée après séchage de la couche de peinture colle extérieure.

L'invention est décrite ci-après en référence au dessin schématique annexé dans lequel :
Figure 1 est une vue très schématique en coupe longitudinale illustrant les différents composants du revêtement en cours d'assemblage ;
Figure 2 est une vue en coupe similaire à celle de figure 1 après assemblage des différents composants ;
Figure 3 est une vue illustrant la fixation de ce revêtement contre un mur.

Le revêtement selon l'invention comprend depuis la face destinée à être appliquée contre un mur vers l'extérieur :
- une nappe 2 réalisée en un non-tissé en polyester de masse surfacique de 40 g/m² qui constitue la couche d'accrochage,
- une nappe 3 de tissu de fibre de verre de masse surfacique de 120 g/m², et
- une couche décor 4, par exemple en fils de verre.

Ces trois couches sont assemblées par couture par un fil 5.

Une couche de protection 6 est appliquée sur la face extérieure du revêtement, qui est constituée par un non-tissé en polyester, de masse surfacique des 20 g/m², et qui est fixé par thermocollage.

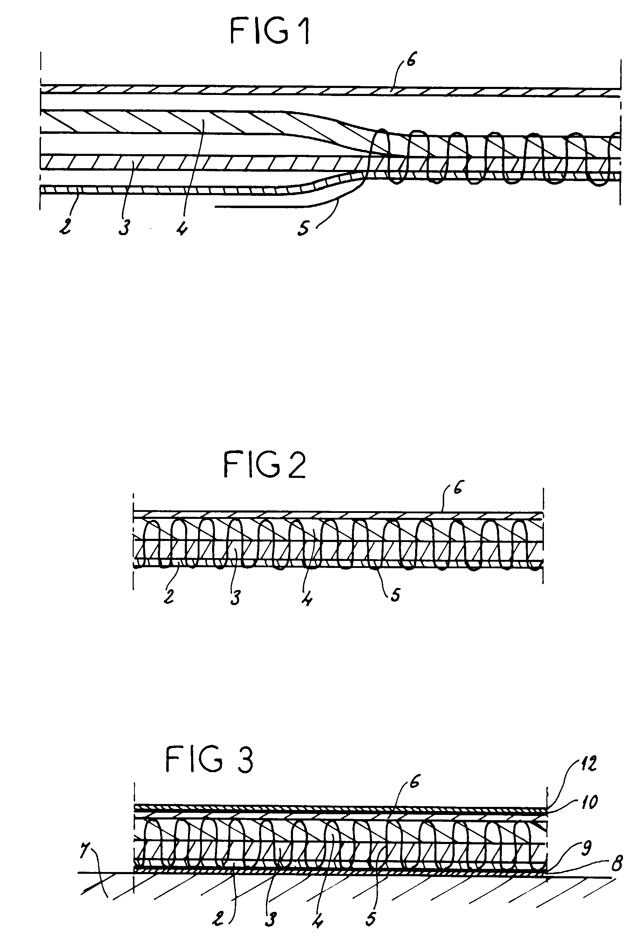

On obtient ainsi le revêtement représenté à la figure 2 qui possède une masse surfacique d'environ 200g/m² dont 60g/m² de polyester.

En pratique, l'application de ce revêtement sur un mur 7 est réalisée par application d'un fixateur 8 sur le mur, application d'une peinture colle 9 sur le mur, application du revêtement sur le mur, passage d'une autre couche de peinture colle 10 sur le revêtement. Après séchage de la peinture colle, une peinture de finition 12 est appliquée sur l'ensemble.

Comme il ressort de ce qui précède, l'invention apporte une grande amélioration à la technique existante, en fournissant un revêtement extérieur de façade de bâtiment qui est obtenu industriellement de façon simple, qui assure une excellente finition en masquant les défauts de planéité locale du mur, en masquant les fissures existantes et les joints, et en résistant aux fissurations à venir.

Comme il va de soi, l'invention ne se limite pas à la seule forme d'exécution de ce revêtement décrite ci-dessus à titre d'exemple, elle en embrasse au contraire toutes les variantes. C'est ainsi notamment que les matériaux constitutifs des différentes couches pourraient être différents ou encore que les trois premières couches pourraient être assemblées non pas par couture, mais par collage, ou par d'autres moyens tels que soudage ou agrafage, sans que l'on sorte pour autant du cadre de l'invention.

## Revendications

1. Revêtement extérieur de façade de bâtiment, caractérisé en ce qu'il comporte, depuis sa face destinée à être fixée sur la façade vers sa face tournée vers l'extérieur :
- une nappe textile (2) réalisée à partir de fibres résistant aux milieux acide et basique, à l'humidité, possédant des propriétés d'allongement, et formant une structure poreuse,
- une nappe textile intermédiaire (3) réalisée à partir de fibres de renfort, et fournissant au revêtement sa résistance mécanique,
- une couche de décor (4),
les différentes nappes et couche étant assemblées les unes aux autres pour former un complexe.

2. Revêtement selon la revendication 1, caractérisé en ce que la nappe textile (2) tournée du côté intérieur est constituée par un non tissé en polyester.

3. Revêtement selon l'une quelconque des revendications 1 et 2, caractérisé en ce que la nappe textile (2) tournée du côté intérieur possède une masse surfacique comprise entre 5 et 400g/m² et de préférence entre 30 et 60 g/m².

4. Revêtement selon l'une quelconque des revendications 1 à 3, caractérisé en ce que la nappe textile intermédiaire (3) est constituée par un tissu de fils de verre.

5. Revêtement selon l'une quelconque des revendications 1 à 4, caractérisé en ce que la nappe textile intermédiaire (3) possède une masse surfacique comprise entre 50 et 500 g/m² et de préférence entre 80 et 150 g/m².

6. Revêtement selon l'une quelconque des revendications 1 à 5, caractérisé en ce que la couche de décor (4) est constituée par des fils de verre.

7. Revêtement selon l'une quelconque des revendications 1 à 6, caractérisé en ce que les différentes nappes et couches (2, 3, 4) sont assemblées par couture (5).

8. Revêtement selon l'une quelconque des revendications 1 à 5, caractérisé en ce que la couche de décor comporte des blocs, par exemple en mousse, fixés par collage.

9. Revêtement selon l'une quelconque des revendications 1 à 8, caractérisé en ce qu'il comprend une couche extérieure de protection (6) constituée par une nappe textile.

10. Revêtement selon la revendication 9, caractérisé en ce que la couche extérieure est constituée par une nappe de non-tissé en polyester d'une masse surfacique comprise entre 5 et 100 g/m² et de préférence entre 10 et 30 g/m².

11. Revêtement selon l'une quelconque des revendications 9 et 10, caractérisé en ce que la couche extérieure de protection (6) est thermofixée, par exemple thermocollée, sur la couche de décor.
